# EUROPEAN PATENT APPLICATION

(11) **EP 2 474 906 A2**
(43) Date of publication of application: **11.07.2012**
(21) Application number: 11176237.3
(22) Date of filing: 02.08.2011
(51) Int. Cl.: G06F 9/445

(54) **Network device management system, network device management apparatus, client apparatus, and network device management method**

(30) Priority: 02.09.2010 JP 2010197147
(71) Applicant: Canon Kabushiki Kaisha, Tokyo 146-8501 (JP)
(72) Inventor: Ohashi, Toshio, Tokyo, Tokyo 146-8501 (JP)
(74) Representative: TBK

(57) **Abstract**

A network device management apparatus requests, of an agent application of a client apparatus, device information of a network device corresponding to a driver program installed on the client apparatus, and outputs device information acquired as a response to the request. At this time, the agent application acquires device information stored in the client apparatus using Device Stage and the like, and then transmits the acquired device information to the network device management apparatus.

## Description

### BACKGROUND OF THE INVENTION

### Field of the Invention

The present invention relates to a network device management system, network device management apparatus, client apparatus, and network device management method to flexibly manage device information of network devices on a network.

### Description of the Related Art

Some conventional network device management systems hold and display information about target network devices to be managed. An example of information about a network device includes an image representing the outer appearance of the network device (see, for example, Japanese Patent Laid-Open No. 2007-109213).

In the conventional management systems, however, a management target device is limited to a network device which is connected to a network such as a LAN, and the existence of which can be directly confirmed by a network search performed by a network device management apparatus.

If it is impossible to acquire device information directly from the network device, the network device management apparatus cannot hold the device information of the device, thereby disabling to display the device information of the device. Alternatively, the network device management apparatus can only display general information held in advance in itself, which is not device-specific information.

### SUMMARY OF THE INVENTION

The present invention has been made in consideration of the above conventional example, and provides a method for allowing management of device information which cannot be conventionally managed by a management apparatus for managing network devices on a network.

The present invention in its first aspect provides a network device management system as specified in claims 1 to 5.

The present invention in its second aspect provides a network device management apparatus as specified in claims 6 to 10.

The present invention in its third aspect provides a client apparatus as specified in claims 11 and 12.

The present invention in its fourth aspect provides a network device management method as specified in claims 13 to 15.

The present invention in its fifth aspect provides a network device management apparatus as specified in claim 18.

According to the present invention, a management apparatus for managing network devices on a network can also manage device information which cannot be acquired by a conventional technique.

Further features of the present invention will become apparent from the following description of exemplary embodiments with reference to the attached drawings.

### BRIEF DESCRIPTION OF THE DRAWINGS

Fig. 1 is a block diagram showing a hardware configuration;

Fig. 2 is a block diagram showing a software configuration according to the first embodiment;

Figs. 3A and 3B are views showing database table structures;

Fig. 4 is a flowchart illustrating an operation when installing a printer driver;

Fig. 5 is a flowchart illustrating an operation when displaying device information;

Fig. 6 is a view showing screen example (1) which displays device information;

Fig. 7 is a view showing screen example (2) which displays device information;

Fig. 8 is a flowchart illustrating an operation after a network device search is performed according to the second embodiment; and

Fig. 9 is a block diagram showing a software configuration according to the second embodiment.

### DESCRIPTION OF THE EMBODIMENTS

Best modes for carrying out the present invention will be described below with reference to the accompanying drawings.

### [First Embodiment]

An application server will be explained as an embodiment of a network device management apparatus according to the present invention. As a network device example, a multifunction printer (MFP) is adopted in this embodiment. Note that a network device in this embodiment is not limited to a device for constructing a network, such as a router or switch, but indicates any device directly or indirectly connected to the network. The network device includes a printer, facsimile, scanner, and switch in addition to an MFP.

### <Configuration of Network Device Management System>

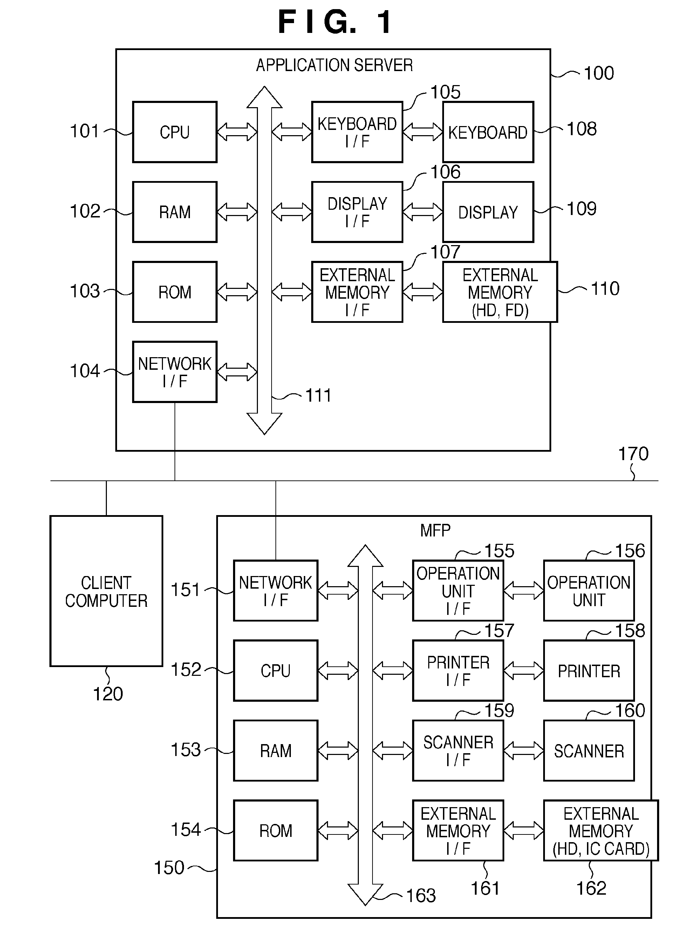

Fig. 1 is a block diagram for explaining the system configuration and hardware configuration of a network device management system including an application server according to this embodiment.

The network device management system includes an application server 100, client computer 120, and MFP 150 which are connected with each other by a network 170. Note that the application server 100 and client computer 120 have the configuration of a general-purpose computer. The hardware configuration of the client computer 120 is the same as that of the application server 100, and a description thereof will be omitted.

A CPU 101 of the application server 100 executes processing based on an application program and the like stored in a ROM 103 or an external memory 110. The CPU 101 comprehensively controls devices connected to a system bus 111. Based on a command instructed by a mouse cursor (not shown) or the like on a display 109, the CPU 101 opens registered various windows, and executes various data processes. A RAM 102 serves as a main memory, a work area, or the like for the CPU 101. The ROM 103 is a read only memory functioning as a memory area for a basic I/O program and the like. The ROM 103 or external memory 110 stores an operating system program (to be referred to as an OS hereinafter) serving as a control program for the CPU 101. The ROM 103 or external memory 110 also stores files and other various data used for processing based on the above application program and the like. A network I/F 104 connects to the network 170 to make network communication. A keyboard I/F 105 controls input from a keyboard 108 or a pointing device (not shown). A display I/F 106 controls the display operation of the display 109. An external memory I/F 107 controls an access to the external memory 110 such as a hard disk (HD) or floppy@ disk (FD). The external memory 110 stores a boot program, various applications, user files, edit files, and the like. The application server 100 operates when the CPU 101 executes the basic I/O program and OS written in the ROM 103 or external memory 110. The basic I/O program is written in the ROM 103, and the OS is written in the ROM 103 or external memory 110. When the computer is turned on, the initial program load function of the basic I/O program loads the OS from the ROM 103 or external memory 110 into the RAM 102 to start the operation of the OS. The system bus 111 connects each device.

A network I/F 151 of the MFP 150 connects to the network 170 to make network communication. Based on a control program or the like, a CPU 152 outputs an image signal as output information to a printer 158 via a printer I/F 157 connected to a system bus 163. Note that a ROM 154 or external memory 162 stores the control program. The CPU 152 can communicate with the computer via the network I/F 151, and notify the application server 100 of information within the MFP 150 and the like. The CPU 152 executes processing based on an application program and the like stored in the ROM 154 or external memory 162. A RAM 153 serves as a main memory, a work area, or the like for the CPU 152, and is configured to increase a memory capacity by an optional RAM connected to an additional port (not shown). The RAM 153 is used as an output information mapping area, an environment data storage area, an NVRAM, or the like. The ROM 154 or the external memory 162 such as a hard disk (HD) stores font data used to generate the control program of the CPU 152 or the above output information, information used in the MFP 150, and the like. An operation unit I/F 155 serves as an interface with an operation unit 156, and outputs image data to be displayed to the operation unit 156. The operation unit I/F 155 also receives information input by the user through the operation unit 156. The operation unit 156 corresponds to an operation panel including switches for operation and an LED indicator. The printer I/F 157 outputs an image signal as output information to the printer 158 (a printer engine). A scanner I/F 159 receives an image signal as input information from a scanner 160 (a scanner engine). An external memory I/F (memory controller) 161 controls an access to the external memory 162 such as a hard disk (HD) or IC card. The number of above-mentioned external memories is not limited to one. The MFP 150 may include at least one external memory, and may be configured to connect the plurality of external memories storing programs for interpreting printer control languages having different language systems, and optional font cards in addition to built-in fonts. Furthermore, the MFP 150 may have an NVRAM (not shown) to store printer mode setting information from the operation unit 156. The system bus 163 connects each device.

### <Software Configuration of Network Device Management Apparatus>

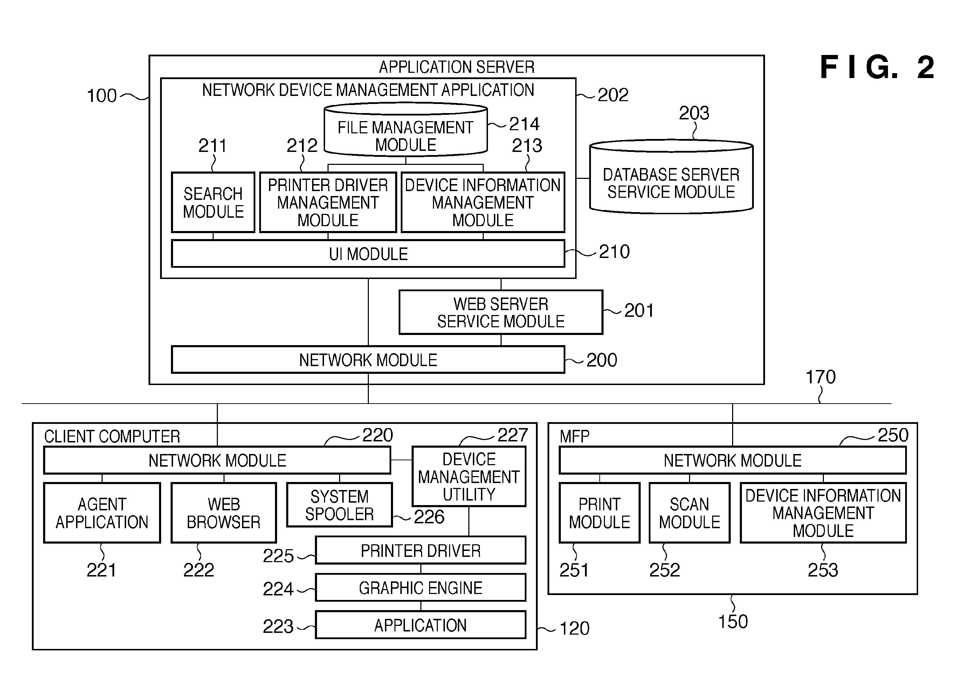

Fig. 2 is a block diagram for explaining the software configuration of the network device management system including the application server of this embodiment.

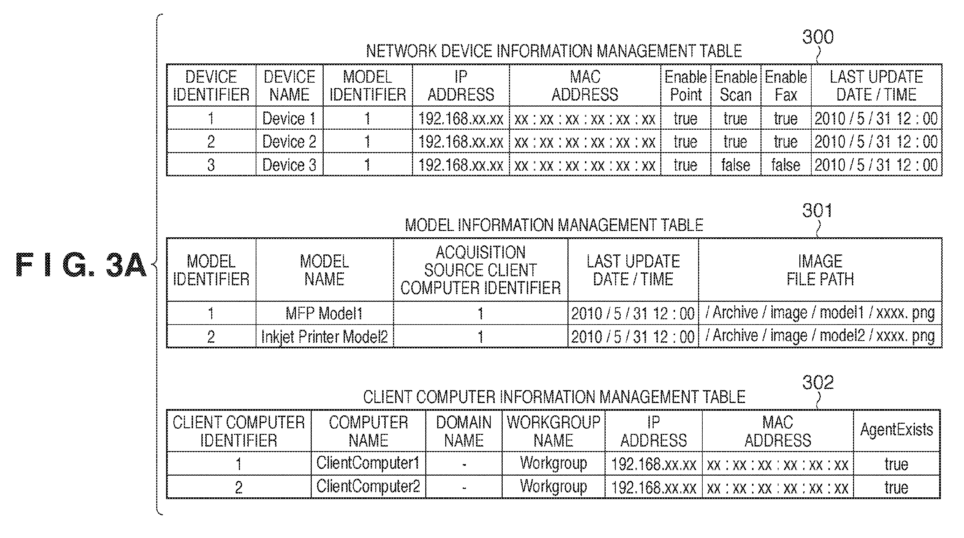

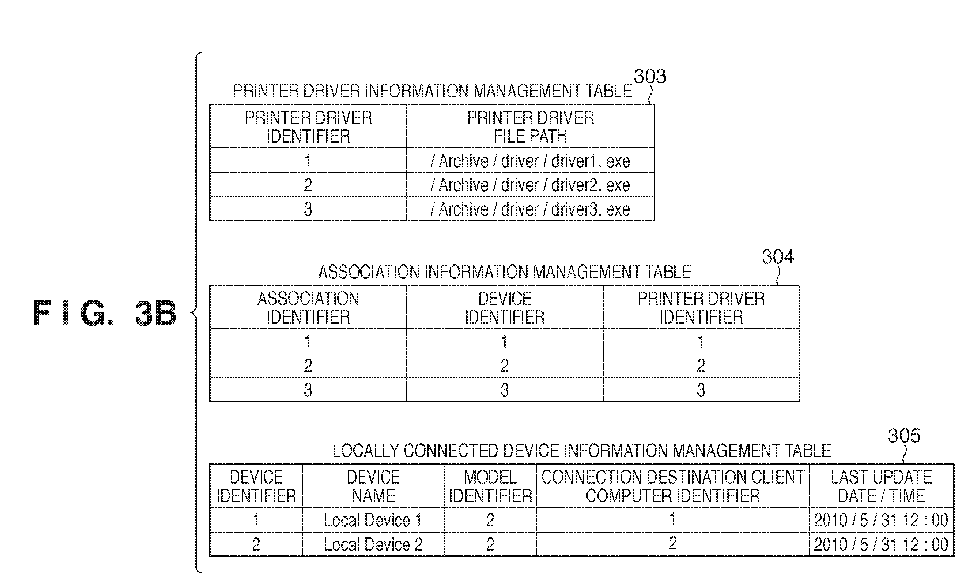

First, the software configuration of the application server 100 will be explained. In the application server 100, a network device management application 202 and each module are present as program files stored in the external memory 110. Each of these program modules is loaded into the RAM 102, and then executed by the OS or a module which uses the module. It is possible to add the network device management application 202 to the FD serving as the external memory 110 or a CD-ROM (not shown), or to add the application 202 to the HD serving as the external memory 110 via the network 170. A network module 200 makes network communication with the client computer 120 and MFP 150 using a predetermined communication protocol. A Web server service module 201 provides a service for responding with an HTTP response upon receiving an HTTP request from a Web browser 222 of the client computer 120. The module 201 may return, as an HTTP response, Web page data stored in the external memory 110. Alternatively, the module 201 may request a UI module 210 of the network device management application 202 to generate an HTTP response. The network device management application 202 manages the client computer 120 and MFP 150 connected with the application server 100 by the network 170. The network device management application 202 is implemented as, for example, a program for executing processing in response to a request for a Web page provided by the Web server service module 201. As described above, the network device management application 202 cooperates with the Web server service module 201 to implement a Web application for managing the client computer 120 and MFP 150. A database server service module 203 manages data such as device information and model information, and stores or extracts the data in response to a request from another module. The database server service module 203 may be provided on any device different from the application server 100 as long as the network device management application 202 can access the module 203. Table structures within the database server service module 203 will be described later with reference to Figs. 3A and 3B.

The UI module 210 of the network device management application 202 generates an HTTP response in response to a request from the Web server service module 201. The module 210 also receives user input information transmitted from the Web browser 222 of the client computer 120, and calls each module as needed. An example of the module called by the UI module 210 includes a search module 211, a printer driver management module 212, and a device information management module 213. The UI module 210 may call modules other than these modules. The search module 211 uses a predetermined communication protocol to search for the client computer 120 and MFP 150 connected with the application server 100 by the network 170, and then detects them. An example of the communication protocol used by the search module 211 for a search includes SNMP (Simple Network Management Protocol) and SLP (Service Location Protocol). In addition, other communication protocols such as SSDP (Simple Services Discovery Protocol) and WS-Discovery (Web Services Dynamic Discovery) may be used. If the search module 211 finds the MFP 150, it acquires device information from the MFP 150, and stores it in a network device information management table 300 of the database server service module 203. Alternatively, if the search module 211 finds the client computer 120, it acquires client information from the client computer 120, and stores it in a client computer information management table 302 of the database server service module 203.

As preprocessing for installing a printer driver 225 on the client computer 120, the printer driver management module 212 installs an agent application 221 on the client computer 120. The printer driver management module 212 communicates with the agent application 221 operating on the client computer 120 to instruct installation of the printer driver 225. At this time, the module 212 may transmit the printer driver 225 itself to the client computer 120. This operation implements remote installation of the printer driver on the client computer 120.

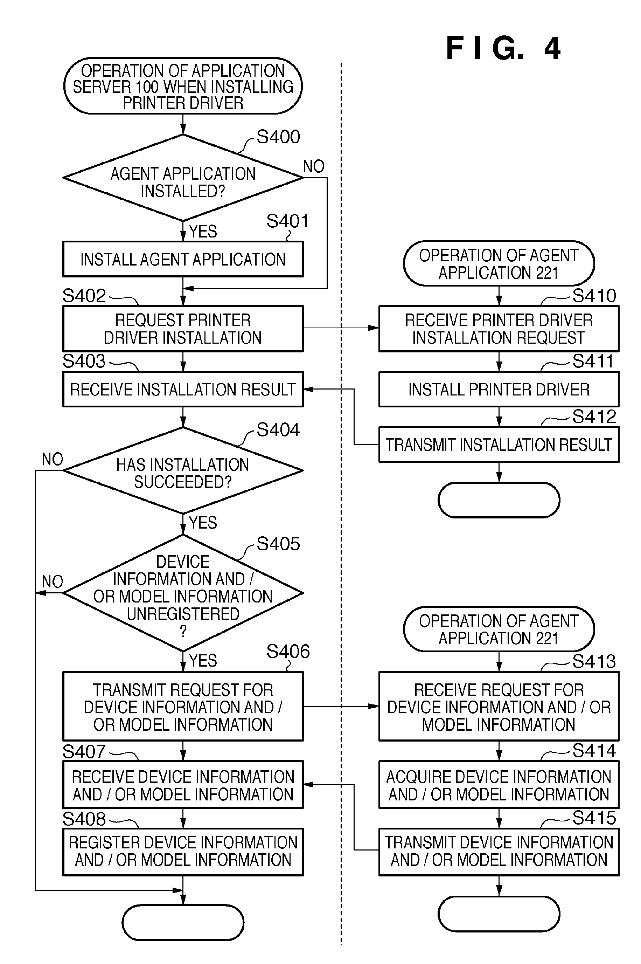

Of device information and model information of a network device and a device locally connected to the client computer 120, the device information management module 213 acquires, from the client computer 120, information which cannot be acquired by the search module 211. The device information contains an image file representing the outer appearance of the device. The database server service module 203 and a file management module 214 store the acquired device information and model information. The device information and model information of the network device and the locally connected device are acquired through the agent application 221 operating on the client computer 120. Note that the locally connected device indicates a device connected to the client computer 120 not via the network 170 to be managed by the application server 100 but via a USB (Universal Serial Bus) or the like. Even if, for example, the client computer 120 is connected with a plurality of networks and there is a network peripheral device connected to a network different from the network 170, the peripheral device is a local device from the viewpoint of the application server 100. In this embodiment, the agent application serves as, at least, a program for executing the procedure of steps S410 to S415 in Fig. 4, and is an autonomous program which operates in the client computer in response to a request from the network device management application.

### <Software Configuration of Client Apparatus>

The software configuration of the client computer 120 will be explained next. Each module constituting the client computer 120 is a program module which exists as a file stored in the ROM 103 or external memory 110. Each module is loaded into the RAM 102, and then executed by the OS or a module which uses the module. Furthermore, it is possible to add the agent application 221, an application 223, and the printer driver 225 to the FD serving as the external memory 110 or a CD-ROM (not shown), or to add them to the HD serving as the external memory 110 via the network 170. Reference numeral 220 denotes a network module which makes network communication with the application server 100 and MFP 150 using an arbitrary communication protocol.

The agent application 221 makes two-way communication with the application server 100 via the network 170, and installs the printer driver 225 on the client computer 120. In response to a request from the application server 100, the agent application 221 transmits device information and model information of the MFP 150 acquired and stored in the client computer 120 by a device management utility 227 (to be described later). Note that the application server 100 remotely installs the agent application 221 on the client computer 120 via the network 170.

The Web browser 222 transmits an HTTP request message via the network module 220, and receives and displays an HTTP response message. The client computer 120 accesses the application server 100 through the Web browser 222. The application 223 capable of printing a document transmits document information to a graphic engine 224. The graphic engine 224 performs screen drawing for the document information, and transmits the result as print data to the printer driver 225. In many cases, the OS of the client computer 120 generally has a function of the graphic engine 224. However, an application may have its function individually. The printer driver 225 converts the received print data and print settings into a PDL (Page Description Language) print instruction (print job), and transmits it to a system spooler 226. The system spooler 226 sequentially transmits print jobs to the MFP 150 via the network module 220.

The device management utility 227 manages device information and model information of a network device connected to the client computer 120, and displays a management screen. Usually, the OS of the client computer 120 has a function of the device management utility 227 represented by a Device Stage® function in a Windows® OS. Upon installation of the printer driver 225 on the client computer 120, the device management utility 227 acquires one or both of device information and model information (to be referred to as device information and/or model information, or to be simply referred to as device information) of a network device associated with the printer driver 225. The device management utility 227 acquires the device information and/or model information via the network module 220. Note that the device information and/or model information may be acquired from a server on the Internet or a computer (server) present on an intranet, or may be acquired directly from the network device. The device management utility 227 stores the acquired device information and/or model information in the client computer 120.

The acquired device information and/or model information contains an image file representing the outer appearance of the network device, function category information indicating a function of the network device, and link information for a manual or external site. The image file representing the outer appearance of the network device contains, for example, an icon which is prepared by the vendor of the network device, and adequately represents the features of the device. An information processing apparatus or management application which is not supplied by the vendor of the network device does not hold, in advance, detailed information of the network device, and may not be able to acquire adequate device information from the network device. In consideration of this situation, the vendor of each network device provides, in advance, information prepared by itself on the Internet, and makes it available by the device management utility 227. The same goes for function category information indicating a function of the network device and link information for a manual or external site in addition to the image file representing the outer appearance of the network device.

The software configuration of the MFP 150 will be described next. In the MFP 150, various modules are present as files stored in the ROM 154 or external memory 162. Each module is loaded into the RAM 153, and then executed. A network module 250 makes network communication with the application server 100 and client computer 120 using an arbitrary communication protocol. A print module 251 receives a print job from the network module 250, and performs print processing via the printer I/F 157. A scan module 252 receives an image signal from the scanner I/F 159, and performs scan processing. A device information management module 253 manages the device information and/or model information of the MFP 150, and sets and acquires the device information in response to a request. The device information and/or model information managed by the module 253 contains a device name, model identification information, an IP address, a MAC address, and information indicating if the device has print, scan, and facsimile functions. The device information management module 253 implements a management function by an arbitrary network management protocol such as SNMP.

### <Examples of Device Information>

Figs. 3A and 3B show table structure examples within the database server service module 203. The table structures shown in Figs. 3A and 3B are merely examples, and other table structures may be applicable. The network device information management table 300 manages information about network devices managed by the network device management application 202. The information managed by the network device information management table 300 contains, for example, a device identifier, a device name, a model identifier, an IP address, a MAC address, information indicating if a corresponding device has print, scan, and facsimile functions, and a last update date/time. The device identifier is used to uniquely identify a network device, and the model identifier is used to uniquely identify the model of the network device. The last update date/time indicates a date/time when the device information is last acquired from the network device. A model information management table 301 manages information about the models of the network devices managed by the network device management application 202. The information managed by the model information management table 301 contains, for example, a model identifier, a model name, an acquisition source client computer identifier, a last update date/time, and an image file path. The acquisition source client computer identifier is used to uniquely identify a client computer from which model information is acquired. The last update date/time indicates a date/time when the model information is last acquired from the client computer. The image file path is storage destination file path information, on the application server 100, of an image file representing the outer appearance of each model. A client computer information management table 302 manages information about client computers managed by the network device management application 202. The information managed by the client computer information management table 302 contains, for example, a client computer identifier, a computer name, a domain/workgroup name, an IP address, a MAC address, and agent application presence/absence information. The client computer identifier is used to uniquely identify a client computer. A printer driver information management table 303 manages information about printer drivers managed by the network device management application 202. The information managed by the printer driver information management table contains, for example, a printer driver identifier and a printer driver file path. The printer driver identifier is used to uniquely identify a printer driver, and the printer driver file path is storage destination file path information, on the application server 100, of the installer file of the printer driver. An association information management table 304 manages information for associating a printer driver with a network device managed by the network device management application 202. The information managed by the association information management table 304 contains, for example, an association identifier, a device identifier, and a printer driver identifier. The association identifier is used to uniquely identify an association between a network device and a printer driver. A locally connected device information management table 305 manages information of network devices locally connected to the client computers managed by the network device management application 202. The information managed by the locally connected device information management table 305 contains, for example, a device identifier, a device name, a model identifier, a connection destination client computer identifier, and a last update date/time. The device identifier is used to uniquely identify a locally connected device. The last update date/time indicates a date/time when device information is last acquired from a client computer.

As described above, the device information contains many pieces of information. The device information, however, need not contain all the items described above, and may contain only some of the items. That is, the device information may contain at least one of an image representing a network device, location information of an image file for the image, information indicating an update time of the driver program of the network device, a function category to which the network device belongs, digital manual data for the network device, and a link to a site where the vendor of the network device provides information. The device information may contain another information specific to the device, as a matter of course.

### <Printer Driver Installation Processing (Device Management Application)>

The operation of the application server 100 and agent application 221 when the user remotely installs a printer driver on the client computer 120 from the application server 100 will be described below with reference to Fig. 4. In this example, a procedure in Fig. 4 is triggered by an installation instruction of a driver program on a client. The user such as an administrator inputs an operation to the application server 100, thereby issuing an installation instruction. This operation specifies a driver program to be installed and a client computer as an installation destination. In addition, when the search module 211 detects a peripheral device connected to the network, it notifies the printer driver management module 212 of detection of the peripheral device, thereby triggering the procedure. In this case, however, it is necessary to additionally specify a client computer as an installation destination. If, therefore, an installation destination of the driver of a newly detected device is determined in advance, the procedure of Fig. 4 is triggered by detection of the device. That is, assume that a network device is automatically detected. In this case, if an installation destination has been specified, the procedure of Fig. 4 is triggered by detection of the network device; otherwise, the procedure of Fig. 4 is triggered by an installation instruction.

The operation of the application server 100 will be explained first. In step S400, the printer driver management module 212 determines whether the agent application 221 has been installed on the client computer 120. To determine whether the application 221 has been installed, the printer driver management module 212 acquires agent application presence/absence information from the client computer information management table 302. If the agent application 221 is not installed on the client computer 120, the process advances to step S401; otherwise, the process advances to step S402. In step S401, the printer driver management module 212 installs the agent application 221 on the client computer 120. The module 212 acquires information about the client computer 120 necessary for installing the agent application 221 from the client computer information management table 302.

In step S402, the printer driver management module 212 requests the agent application 221 operating on the client computer 120 to install the printer driver 225. Information necessary for installing the printer driver 225 is acquired from the network device information management table 300, client computer information management table 302, printer driver information management table 303, and association information management table 304. The printer driver management module 212 acquires the installer of the printer driver 225 stored in the file management module 214, and transmits it to the agent application 221. Alternatively, the agent application 221 may perform communication such as a Web service upon reception of the installation request, and acquire the installer of the printer driver 225 stored in the file management module 214 of the application server 100. Then, the agent application 221 uses the installer of the printer driver 225 to install the printer driver 225 on the client computer 120.

Information used prior to installation of the printer driver, that is, information registered in the network device information management table 300, client computer information management table 302, printer driver information management table 303, and association information management table 304 is different from device information to be acquired later. The information used here is for installation of the driver, and therefore, mainly contains information indicating a location where the driver program is obtained. For example, each vendor of devices stores, in advance, a URL where the vendor provides a driver, and a vendor ID and device ID which are contained in notification information of connection of a network device from the network or which are specified by an installation operation are specified to access the URL where the vendor provides the driver, thereby downloading the driver. Alternatively, it is possible to use a driver program provided for an application server through a storage medium such as an optical disk.

In step S403, the printer driver management module 212 receives an installation result of the printer driver 225 from the agent application 221. In step S404, based on the installation result received from the agent application 221, the printer driver management module 212 determines whether installation of the printer driver 225 on the client computer 120 has succeeded. If it is determined that installation has succeeded, the process advances to step S405; otherwise, the process ends. In step S405, the device information management module 213 determines whether the device information and/or model information of the MFP 150 associated with the installed printer driver has been registered in the database server service module 203. To determine whether the device information and/or model information has been registered in the database server service module 203, the device information management module 213 acquires information from the network device information management table 300 and model information management table 301. If the device information and/or model information is unregistered, the process advances to step S406; otherwise, the process ends.

In step S406, the device information management module 213 requests, of the agent application 221 operating on the client computer 120, the device information and/or model information of the network device corresponding to the installed driver program. In step S407, the device information management module 213 receives the device information and/or model information from the agent application 221 as a response to the request. In step S408, the device information management module 213 registers the device information and/or model information in the database server service module 203. That is, the module 213 stores the device information and/or model information in the network device information management table 300, model information management table 301, and locally connected device information management table 305. If the device information received by the device information management module 213 from the agent application 221 is the device information of the network device, the module 213 stores the device information in the network device information management table 300. If the received device information contains device information of a device locally connected to the client computer 120, the module 213 stores the device information in the locally connected device information management table 305. The module 213 stores the received model information in the model information management table 301.

### <Printer Driver Installation Processing (Agent)>

The operation of the agent application 221 operating on the client computer 120 will be explained next. In step S410, the agent application 221 receives the printer driver installation request transmitted from the application server 100. In step S411, the agent application 221 acquires the installer of the printer driver 225 from the application server 100, and installs the printer driver 225 on the client computer 120. In step S412, the agent application 221 transmits an installation result of the printer driver 225 on the client computer 120 to the application server 100.

In step S413, the agent application 221 receives the request for the device information and/or model information transmitted from the application server 100. In step S414, the agent application 221 acquires the device information and model information stored in the client computer 120. An example of the device information and model information stored in the client computer 120 includes device metadata package information acquired using the Device Stage® function on the Windows® OS. Note that the device management utility 227 on the OS automatically downloads and installs the device metadata package information on the client computer 120 from a server on the Internet in installing a printer driver. When installing the device metadata package information, a file representing the device metadata package information is copied in an arbitrary folder on the client computer 120. This enables the agent application 221 to access the folder as an installation destination of the device metadata package information to acquire the device metadata package information. Note that the device metadata package information contains, for example, an image file representing the outer appearance of the device, and function category information indicating a function of the device. The device metadata package information may contain other information about the device and model, as a matter of course. Furthermore, if the printer driver of a device other than the MFP 150 whose printer driver was installed from the application server 100 has been installed on the client computer 120, device information and/or model information of the device is also stored. In this case, the agent application 221 simultaneously acquires device metadata package information of the device whose printer driver was not installed from the application server 100. In step S415, the agent application 221 transmits the acquired device information and/or model information to the application server 100.

### <Device information Display Processing>

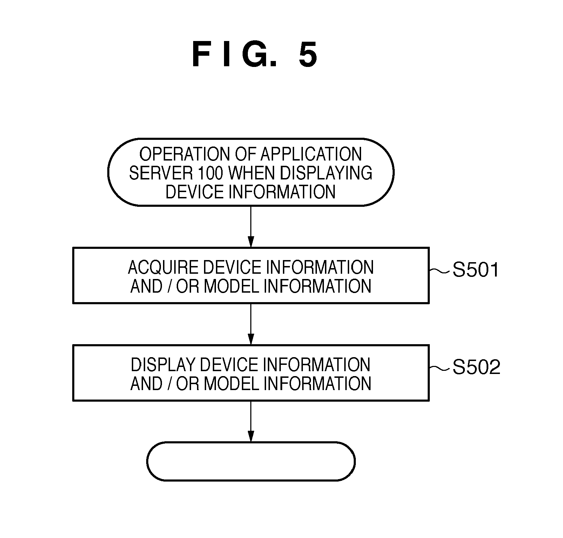

The operation of the application server 100 when the user displays device information on the application server 100 will be described next with reference to Fig. 5. Upon reception of an UI display request from the UI module 210, the device information management module 213 advances to a process in step S501. In step S501, the device information management module 213 acquires device information and/or model information from the network device information management table 300 and model information management table 301. In step S502, the device information management module 213 outputs information for a device list screen via the UI module 210. The procedure of Fig. 5 is executed in response to an HTTP request sent from the Web browser 222 of the client computer 120 to the Web server service module 201 of the application server 100. In this case, the UI module 210 passes the information for the device list screen to the Web server service module 201. The module 201 then transmits the information to the Web browser 222 of the client, thereby displaying it. Note that the UI of the server may display the device list screen.

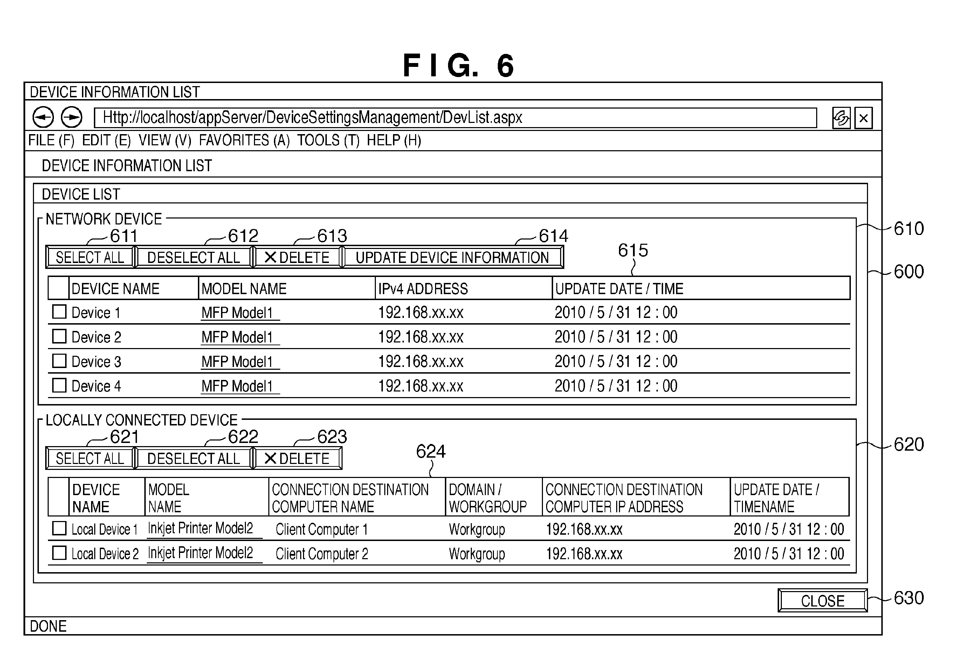

Fig. 6 shows an example of the list screen displaying information about devices to be managed, which is displayed on the Web browser 222 of the client computer 120. Referring to Fig. 6, a device information display portion 600 is an area for displaying device information and/or model information. The device information display portion 600 includes a network device information display portion 610 for displaying device information of network devices, and a locally connected device information display portion 620 for displaying device information of devices locally connected to the client computer 120. When a "close" button 630 is clicked, the window of the Web browser 222 is closed. The network device information display portion 610 includes elements 611 to 615. When the "select all" button 611 is clicked, all check boxes for the network devices in the network device information list display portion 615 (to be described later) are selected. When the "deselect all" button 612 is clicked, all the check boxes for the network devices in the network device information list display portion 615 (to be described later) are deselected. When the delete button 613 is clicked, information of network devices whose check boxes are selected in the network device information list display portion 615 (to be described later) is deleted from the screen. Also, the device information management module 213 receives a delete request via the UI module 210, and then deletes device information of the corresponding network devices from the network device information management table 300. When the "update device information" button 614 is clicked, the device information management module 213 receives an information update request via the UI module 210, and then updates the device information in the network device information management table 300. To update the device information, the device information management module 213 communicates with the MFP 150 via the network 170, and acquires latest device information. The network device information list display portion 615 displays a list of pieces of device information of a plurality of network devices. Displayed items include a device name, a model name, an IP address, the last update date/time of device information, and a check box used by the user to select a corresponding device. The model name is displayed as a link. When the link is clicked, a screen displaying more detailed information of the network device is displayed on a subwindow.

The locally connected device information display portion 620 includes elements 621 to 624. When the "select all" button 621 is clicked, all check boxes for the locally connected devices in the locally connected device information list display portion 624 (to be described later) are selected. When the "deselect all" button 622 is clicked, all the check boxes for the locally connected devices in the locally connected device information list display portion 624 (to be described later) are deselected. When the delete button 623 is clicked, information of locally connected devices whose check boxes are selected in the locally connected device information list display portion 624 (to be described later) is deleted from the screen. In addition, the device information management module 213 receives a delete request via the UI module 210, and then deletes device information of the corresponding locally connected devices from the locally connected device information management table 305. The locally connected device information list display portion 624 displays a list of pieces of device information of a plurality of devices locally connected to the client computer 120. Displayed items include a device name, a model name, the computer name of a connection destination client computer, a domain name/workgroup name, an IP address, the last update date/time of device information, and a check box used by the user to select a corresponding device. The model name is displayed as a link. When the link is clicked, the device information management module 213 displays, via the UI module 210, a screen displaying the detailed information of the device.

As described above, the device list screen displays device information of network devices including that of devices locally connected to the client. Note that the devices connected to the network and the locally connected devices are displayed so as to be recognizable.

In this embodiment, pieces of information about network devices are listed. It is, however, possible to form a network device screen by arranging icons corresponding to the devices on a map image such as an office map. When the user places the cursor on an icon arranged on the map using a mouse or the like, device information and/or model information of a corresponding device or information indicating that a corresponding device is locally connected may be displayed. By instructing to display detailed information when an icon arranged on the map is selected, it is possible to control to display a screen displaying the detailed information of a corresponding device on a subwindow.

### <Example of Details Display of Device Information>

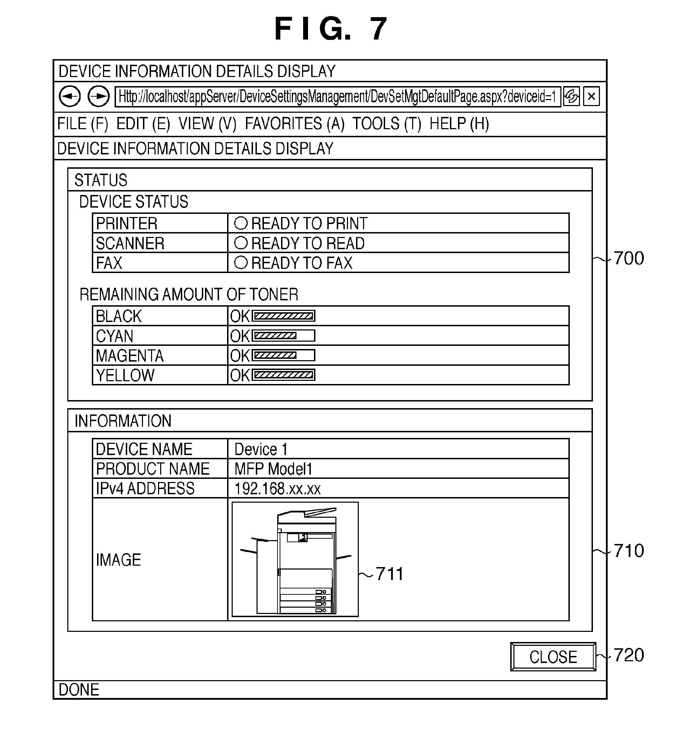

Fig. 7 shows a screen example displaying detailed information of a device displayed on the Web browser 222 of the client computer 120. Referring to Fig. 7, a device status display portion 700 displays information indicating the status of the MFP 150. The information indicating the status of the MFP 150 contains information representing whether printing is available, whether scanning is available, and whether facsimile is available, and information such as the remaining amount of toner. A device information display portion 710 displays basic information about the MFP 150. The basic information about the MFP 150 contains, for example, a device name, a model name, an IP address, and a device image representing an outer appearance. A device image display portion 711 displays a device image representing the outer appearance of the MFP 150. When a "close" button 720 is clicked, the window of the Web browser 222 is closed.

If, for example, the device image indicating the outer appearance of the MFP 150 was acquired from the client computer on the network in the processing described with reference to Fig. 4, the device image display portion 711 uses the acquired image. If the image was not particularly acquired, the device image display portion 711 uses a common image for various kinds of general-purpose printers managed by the network device management application 202. If link information for the manual of the MFP 150 or an external site, and the like were acquired as device information and/or model information, these pieces of information may be displayed on the details screen; otherwise, nothing is displayed.

With the above processing, even if the device information of the MFP 150 managed by the application server 100 is not held, it is possible to acquire and display device information stored in the client computer 120 which uses the MFP 150. By considering, as a management target, a device not connected to the same network as that of the application server 100 (that is, a network device management apparatus), it is also possible to acquire and then store, manage, and display device information of the device.

### [Second Embodiment]

In the first embodiment, a method of acquiring device information from the client computer 120 when the application server 100 installs the printer driver 225 on the client computer 120 has been explained. The method according to the first embodiment is, however, based on the premise that the apparatus management utility 227 exists on the client computer 120 and the printer driver of the MFP 150 is installed on the client computer 120. If, therefore, the apparatus management utility 227 does not exist on the client computer 120 or the printer driver of the MFP 150 is not installed on the client computer 120, it is impossible to use the method according to the first embodiment. In the second embodiment, in order for an application server 100 to acquire device information, a printer driver is installed on the application server 100 itself to acquire the device information.

The system configuration and hardware configuration of a network device management system including an application server according to this embodiment are the same as those in Fig. 1 in the first embodiment, and a description thereof will be omitted.

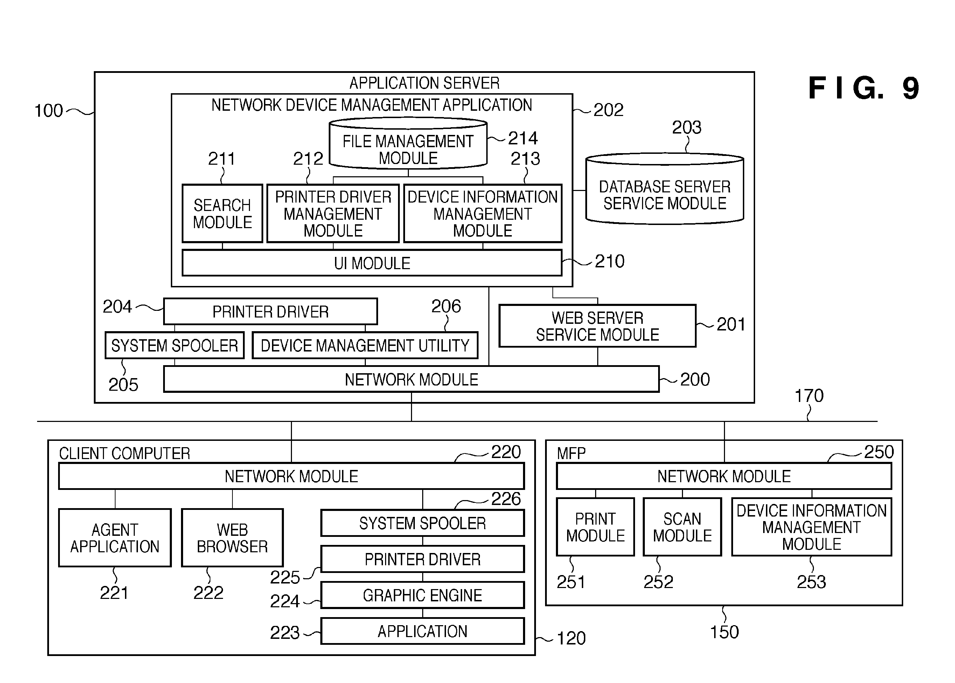

Fig. 9 is a block diagram for explaining the software configuration of the network device management system including the application server according to this embodiment. Note that a description of the same modules as those in Fig. 2 in the first embodiment will be omitted. In the application server 100, a printer driver 204, a system spooler 205, and a device management utility 206 exist as files stored in an external memory 110. Each of these program modules is loaded into a RAM 102 and then executed by the OS or a module which uses the module. It is possible to add the printer driver 204 to an FD serving as the external memory 110 or a CD-ROM (not shown), or to add the printer driver 204 to an HD serving as the external memory 110 via a network 170. The printer driver 204 receives print data and print settings, converts them into PDL data, and then transmits it to the system spooler 205. The system spooler 205 sequentially transmits print jobs to an MFP 150 via a network module 200. The device management utility 206 manages device information and model information of network devices connected to the application server 100, and displays them on a screen. Usually, the OS of the application server 100 has a function of the device management utility 206 represented by the Device Stage function on the Windows OS. Upon installation of the printer driver 204 on the application server 100, the device management utility 206 acquires device information and/or model information of a network device associated with the printer driver 204. The device management utility 206 acquires the device information and/or model information via the network module 200. Note that the device information and/or model information may be acquired from a server on the Internet or a computer present on an intranet, or may be acquired directly from the network device. The device management utility 206 stores the acquired device information and/or model information in the application server 100. The acquired device information and/or model information contains, for example, an image file representing the outer appearance of the network device, function category information indicating a function of the network device, link information for a manual or external site.

In the table structure within the database server service module 203 of Fig. 3A in the first embodiment, the model information managed by the model information management table 301 contains the acquisition source client computer identifier. In this embodiment, however, since the model information is acquired from the application server 100 itself, model information managed by a model information management table 301 need not contain an acquisition source client computer identifier. Other table structures within a database server service module 203 are the same as those shown in Figs. 3A and 3B in the first embodiment, and a description thereof will be omitted.

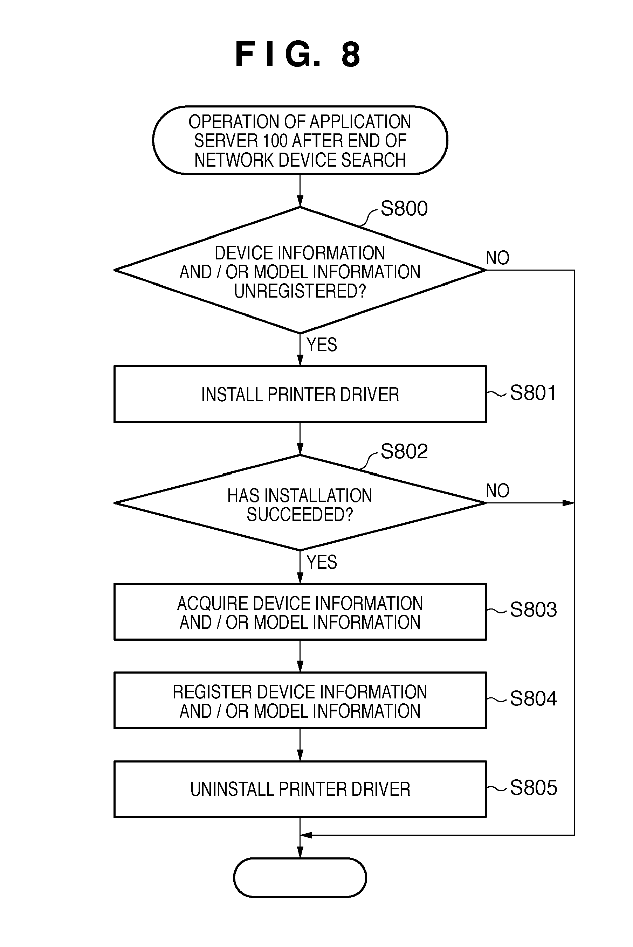

The operation of the application server 100 after the application server 100 completes search processing of the MFP 150 will be described below with reference to Fig. 8.

When a search module 211 receives a search request from the user via a UI module 210, and then completes search processing of the MFP 150, a device information management module 213 advances to a process in step S800. In step S800, the device information management module 213 determines whether device information and/or model information of the MFP 150 is registered in the database server service module 203. To determine whether the device information and/or model information is registered in the database server service module 203, the device information management module 213 acquires information from a network device information management table 300 and the model information management table 301. If the device information and/or model information is unregistered, the process advances to step S801; otherwise, the process ends. In step S801, a printer driver management module 212 installs, on the application server 100, the printer driver 204 necessary for using the MFP 150. In step S802, the printer driver management module 212 determines based on an installation result of the printer driver 204 whether installation has succeeded. If it is determined that installation has succeeded, the process advances to step S803; otherwise, the process ends. In step S803, the device information management module 213 acquires device information and model information stored in the application server 100. An example of the device information and model information stored in the application server 100 includes device metadata package information acquired using the Device Stage function on the Windows OS. Note that the device management utility 206 on the OS automatically downloads and installs the device metadata package information on the application server 100 from a server on the Internet in installing a printer driver. When installing the device metadata package information, a file representing the device metadata package information is copied in an arbitrary folder on the application server 100. With this processing, when installation of the driver succeeds, the device information management module 213 can access the folder as an installation destination of the device metadata package information to acquire the device metadata package information. Note that the device metadata package information contains, for example, an image file representing the outer appearance of the device, and function category information indicating a function of the device. The device metadata package information may contain other information about the device and model, as a matter of course. In step S804, the device information management module 213 stores the device information and/or model information in the network device information management table 300 and model information management table 301. In step S805, the printer driver management module 212 uninstalls the printer driver 204 installed in step S802.

The operation of the application server 100 when the user displays device information on the UI of the application server 100 is the same as that illustrated in Fig. 5 in the first embodiment, and a description thereof will be omitted.

With the above processing, the application server 100 can acquire the stored device information of the MFP 150 by installing the printer driver 204 on itself, and display it on the network device management application 202. The method according to this embodiment can be used even when a device management utility 227 does not exist on the client computer 120 or when the printer driver of the MFP 150 is not installed on the client computer 120.

### [Other Embodiments]

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
A network device management apparatus requests, of an agent application of a client apparatus, device information of a network device corresponding to a driver program installed on the client apparatus, and outputs device information acquired as a response to the request. At this time, the agent application acquires device information stored in the client apparatus using Device Stage and the like, and then transmits the acquired device information to the network device management apparatus.

## Claims

1. A network device management system including a network device management apparatus, a network device, and a client apparatus which uses said network device,
said network device management apparatus comprising:
transmission means for transmitting, to said client apparatus, an installation request of a driver program of said network device and a request for device information of said network device corresponding to the installed driver program,
storage means for storing the device information received from said client apparatus as a response to the device information request, and
output means for displaying the device information or providing the device information for an apparatus on a network as output of the stored device information,
said client apparatus comprising:
management means for storing device information of a network device corresponding to an installed driver program by acquiring the device information from a server which provides the device information, and
agent means for controlling, in response to the install request of the driver program received from said network device management apparatus, to install the driver program, and transmitting, in response to the device information request received from said network device management apparatus, the device information managed by said management means.

2. The system according to claim 1, wherein the device information contains at least one of an image representing said network device, location information of an image file, information indicating an update time of the driver program of said network device, a function category to which said network device belongs, digital manual data of said network device, and a link to a site where a vendor of said network device provides information.

3. The system according to claim 1 or 2, wherein
said network device management apparatus further includes installation means for determining whether an agent application has been installed on said client apparatus, and installing, if the agent application is not installed, the agent application on said client apparatus, and said client apparatus further includes means for executing, when the agent application is installed, the agent application to function as said agent means, or
said network device includes a locally connected device locally connected to said client apparatus, the device information received by said network device management apparatus from said client apparatus as a response to the device information request includes device information of the locally connected device, and said output means outputs the device information of the locally connected device so as to be recognizable, or
said network device management apparatus further includes detection means for detecting connection of a newly connected network device, and when the connection is detected, said network device management apparatus transmits an installation request of a driver program of the detected network device to said client apparatus.

4. A network device management apparatus connected with a network device and a client apparatus which uses the network device, comprising:
transmission means for transmitting, to the client apparatus, a request for device information managed by a function of managing device information acquired from a server which provides device information of a network device operating on the client apparatus,
storage means for storing the device information received from the client apparatus as a response to the device information request, and
output means for displaying the device information or providing the device information for an apparatus on a network as output of the stored device information.

5. The apparatus according to claim 4, wherein the device information contains at least one of an image representing the network device, location information of an image file, information indicating an update time of the driver program of the network device, a function category to which the network device belongs, digital manual data of the network device, and a link to a site where a vendor of the network device provides information.

6. The apparatus according to claim 4 or 5, wherein
the function of managing the device information acquired from the server which provides the device information of the network device operating on the client apparatus manages device information of a network device corresponding to a driver program installed on the client apparatus, or
the function of managing the device information acquired from the server which provides the device information of the network device operating on the client apparatus is provided as a function of an operating system of the client apparatus, or
said transmission means transmits an installation request of a driver program of a network device to the client apparatus prior to the device information request.

7. A client apparatus which is connected with a network device management apparatus, and uses a network device, comprising:
management means for storing device information of a network device corresponding to an installed driver program by acquiring the device information from a server which provides the device information; and
agent means for controlling to install the driver program, and transmitting, in response to a device information request received from the network device management apparatus, the device information managed by said management means.

8. The apparatus according to claim 7, wherein said management means is provided as a function of an operating system of said client apparatus.

9. A network device management method for a network device management system including a network device management apparatus, a network device, and a client apparatus which uses the network device, the method comprising the steps of:
transmitting, by the network device management apparatus, an installation request of a driver program of the network device to the client apparatus;
installing, by the client apparatus, the driver program in response to the installation request of the driver program received from the network device management apparatus;
managing, by the client apparatus, device information of a network device corresponding to an installed driver program by acquiring the device information from a server which provides the device information;
transmitting, by network device management apparatus to the client apparatus, a request for device information of the network device corresponding to the installed driver program;
transmitting, by client apparatus, the managed device information in response to the device information request received from the network device management apparatus;
storing, by network device management apparatus, the device information by receiving the device information from the client apparatus; and
displaying, by network device management apparatus, the device information or provide the device information for an apparatus on a network as output of the stored device information.

10. A network device management method performed by a network device management apparatus connected with a network device and a client apparatus which uses the network device, the method comprising the steps of:
transmitting, to the client apparatus, a request for device information managed by a function of managing device information acquired from a server which provides device information of a network device operating on the client apparatus;
storing the device information received from the client apparatus as a response to the device information request; and
displaying the device information or providing the device information for an apparatus on a network as output of the stored device information.

11. A network device management method performed by a client apparatus which is connected with a network device management apparatus, and uses a network device, the method comprising the steps of:
managing device information of a network device corresponding to an installed driver program by acquiring the device information from a server which provides the device information; and
causing an agent to control to install the driver program, and transmit, in response to a device information request received from the network device management apparatus, the device information managed in said managing step.

12. A program for causing a computer to function as an apparatus according to any one of claims 4 to 6.

13. A program for causing a computer to function as agent means for controlling to install a driver program of a network device, and transmitting, in response to a device information request received from a network device management apparatus connected via a network, device information of the network device corresponding to the installed driver program that has been acquired from a server which provides the device information of the network device using a function of managing device information of a network device corresponding to an installed driver program.

14. A network device management apparatus which includes storage means, and manages a network device on a network, comprising:
installation means for controlling to install a driver program of a network device;
management means for storing device information of the network device corresponding to the installed driver program in said storage means by acquiring the device information from a server which provides the device information;
means for controlling to uninstall the driver program after said management means stores the device information of the network device corresponding to the installed driver program in said storage means; and
output means for displaying the device information or providing the device information for an apparatus on the network as output of the device information stored in said storage means.

15. A program for causing a computer to function as
means for controlling to install a driver program of a network device,
means for controlling to uninstall the driver program after a function of managing device information of a network device corresponding to an installed driver program stores device information of the network device corresponding to the installed driver program in a storage device by acquiring the device information from a server which provides the device information of the network device; and
output means for displaying the device information or providing the device information for an apparatus on a network as output of the device information stored in the storage device.
